# EUROPÄISCHE PATENTSCHRIFT

(11) **EP 0 980 199 B1**
(45) Veröffentlichungstag und Bekanntmachung des Hinweises auf die Patenterteilung: **09.01.2008**
(21) Anmeldenummer: 99113875.1
(22) Anmeldetag: 16.07.1999
(51) Int. Cl.: H05K 5/00, H04M 1/02

(54) **Türanlage, insbesondere Türsprechanlage**
Door installation, especially door telephone
Installation de porte, plus spécialement interphone

(30) Priorität: 12.08.1998 DE 19836479
(43) Veröffentlichungstag der Anmeldung: 16.02.2000
(73) Patentinhaber: Ritto - Werk Loh GmbH & Co. KG, 35708 Haiger (DE)
(72) Erfinder: Achenbach, Heinz, 35236 Breidenbach (DE)
(74) Vertreter: Fleck, Hermann-Joseph

(56) Entgegenhaltungen:
- EP-A- 0 452 658
- EP-A- 0 505 913
- DE-A- 4 134 044

## Beschreibung

Die Erfindung betrifft eine Türsprechanlage mit einer Türstation, die ein Aufnahmegehäuse für in Zeilen und Spalten aneinanderreihbare Moduleinheiten aufweist, wobei die Moduleinheiten mittels Verbindungsleitungen elektrisch miteinander verbunden sind.

Türanlagen, insbesondere Türsprechanlagen dieser Art sind seit vielen Jahren in unterschiedlichen Ausführungen bekannt, die modulartig aufgebaut sind und unterschiedliche Moduleinheiten in dem Aufnahmegehäuse zeilen- und/oder spaltenweise aneinandergereiht aufnehmen, wie insbesondere die FR-PS 2 122 912, die DE-OS 31 08 056 und die DE 40 19 837 C2 zeigen.

Bei diesen bekannten Türanlagen müssen die im Aufnahmegehäuse untergebrachten Moduleinheiten elektrisch miteinander verbunden und mit einem Anschlußkabel mit der oder den Wohnungsstationen verbunden werden. Dies bedingt eine individuelle, vom Ausbau der Türanlage abhängige Verdrahtung der Moduleinheiten.

Es sind nun auch Türanlagen auf den Markt gekommen, bei denen die modulartig aufgebaute Türstation nur noch über eine Zweidraht-Busleitung mit den Wohnungsstationen verbunden wird, da auf dieser sowohl die Sprachübertragung als auch die Übertragung aller für den Verbindungsaufbau und -abbau sowie die Steuerung des Türöffners nötigen Signale codiert erfolgt. Diese Zweidraht-Busanlagen erleichtern die Verdrahtung am Einbauort.

Aus der DE 41 34 044 ist eine Türanlage mit in Zeilen- und Spaltenrichtung aneinander reihbare Moduleinheiten gemäß dem Oberbegriff des Anspruchs 1.

Es ist Aufgabe der Erfindung, bei einer Türanlage der eingangs erwähnten Art gerade für den Einsatz als Zweidraht-Busanlage auch die Verdrahtung der Moduleinheiten im Aufnahmegehäuse zu vereinfachen.

Diese Aufgabe wird nach der Erfindung gemäß Anspruch 1 gelöst, wobei die Moduleinheiten an den senkrecht zu den Zeilen und/oder Spalten stehenden und jeweils einander gegenüberliegenden Außenseiten mit Steckanschlüssen versehen sind, die in der Moduleinheit mittels Vielfachleitungen elektrisch parallelgeschaltet sind und daß in Zeilen- und/oder Spaltenrichtung aufeinander ausgerichteten Steckanschlüsse benachbarter Moduleinheiten jeweils als Steckerleiste und Steckbuchse ausgebildet direkt ineinander steckbar sind oder einheitlich als Steckbuchsen oder Steckerleisten ausgebildet über Zusatzsteckerleisten oder Zusatzsteckbuchsen miteinander verbindbar sind.

Sind alle Moduleinheiten mit diesen Steckanschlüssen und Vielfachleitungen versehen, dann werden sie schon beim Einbau in das Aufnahmegehäuse elektrisch miteinander verbunden. Bei der paarweisen Ausbildung der Steckanschlüsse als Steckerleiste und Steckbuchse werden die Moduleinheiten über diese Steckverbindungen vielfachgeschaltet. Sind alle Moduleinheiten einheitlich mit Steckbuchsen versehen, die vorzugsweise bündig in die Außenseiten der Moduleinheiten eingebaut sein können, dann werden Zusatzsteckerleisten für den beidseitigen Anschluß von Steckbuchsen zur Verbindung benachbarter Moduleinheiten verwendet. Diese Verbindungsart hat den Vorteil, daß das Aufnahmegehäuse das Feld der zeilen- und/oder spaltenweise aneinandergereihten Moduleinheiten mit kleinem Abstand umschließen kann.

Selbstverständlich können die Moduleinheiten auch einheitlich als Steckerleisten ausgebildete Steckanschlüsse tragen und zur Verbindung benachbarter Moduleinheiten werden dann Zusatzsteckbuchsen verwendet, die beidseitig Steckerleisten aufnehmen können.

Nach der Erfindung gemäß Anspruch 1 ist vorgesehen, daß die Moduleinheiten an den jeweils einander gegenüberliegenden Außenseitenpaare jeweils eine Steckerleiste und eine Steckbuchse tragen, daß die beiden Paare von Steckerleiste und Steckbuchse über je eine Vielfachleitung elektrisch miteinander verbunden sind und daß die beiden Vielfachleitungen adernindividuell parallelgeschaltet sind. Die so ausgestalteten Moduleinheiten lassen sich dann zeilen- und spaltenweise direkt miteinander zusammenstecken und gleichzeitig elektrisch vielfachschalten.

Die elektrische Verdrahtung der Moduleinheit erfolgt nach einer Ausgestaltung in einfacher Weise dadurch, daß alle als Steckbuchsen und/oder als Steckerleisten ausgebildeten Steckanschlüsse der Moduleinheit auf einer Leiterplatte befestigt und mittels gedruckter Leiterbahnen adernindividuell parallelgeschaltet sind.

Nach einer bevorzugten Ausgestaltung weisen die Moduleinheiten quadratische Form auf.

Ist dabei vorgesehen, daß die Vielfachleitungen in die Randbereiche von zwei senkrecht aufeinanderstoßender Außenseiten der Leiterplatte gelegt und im Bereich der Kreuzungspunkte ihrer Adern elektrisch miteinander verbunden sind, dann verbleibt auf der Leiterplatte genügend Platz für die Befestigung und die Verdrahtung der für die Funktion der Moduleinheit erforderlichen Bauteile, die ebenfalls mit den Vielfachleitungen verbunden werden können. Die Leiterplatte ist in der Moduleinheit untergebracht, so daß die für die Vielfachschaltung der Moduleinheiten erforderliche Verdrahtung Bestandteil der Moduleinheiten ist.

Nach einer Ausgestaltung ist vorgesehen, daß die eine Vielfachleitung auf der Oberseite und die andere Vielfachleitung auf der Unterseite der Leiterplatte aufgebracht sind, so daß an den Kreuzungspunkten die einzelnen Adern der Vielfachleitungen auf einfache Weise durchkontaktiert werden können.

Der Anschluß der Türanlage erfolgt nach einer Ausgestaltung dadurch, daß die im Aufnahmegehäuse untergebrachten Moduleinheiten mittels eines Anschlußsteckers elektrisch anschließbar sind, der einseitig als Steckerleiste oder Steckbuchse ausgebildet und mit einer umfangsseitig freien Steckbuchse oder Steckerleiste einer Moduleinheit der in Zeilen und/oder Spalten untereinander verbundenen Moduleinheiten ansteckbar ist, und daß der Anschlußstecker auf der anderen Seite mit Schraubanschlüssen für die Adern eines Anschlußkabels versehen ist.

Damit in einem Rasterfeld die an beliebigen Stellen angeordneten Moduleinheiten leichter ausgetauscht werden können, sieht eine vorteilhafte Ausgestaltung vor, daß bei in Zeilen und Spalten aneinandergereihten Moduleinheiten nur in einer Zeile oder Spalte die Moduleinheiten über Steckverbindungen miteinander verbunden sind, daß ausgehend von dieser Zeile oder Spalte die spalten- oder zeilenweise anschließenden Moduleinheiten mittels Steckverbindungen mit den vielfachgeschalteten Moduleinheiten dieser Zeile oder Spalte verbunden sind und daß die Moduleinheiten allseitig bündig eingelassene Steckbuchsen tragen, die mit Zusatzsteckern miteinander verbindbar sind. Die Moduleinheiten lassen sich dann spalten- oder zeilenweise von der in der Zeile oder Spalte vielfachgeschalteten Modulzeile oder Modulspalte lösen.

Die Erfindung wird anhand von in den Zeichnungen dargestellten Ausführungsbeispielen näher erläutert. Es zeigen:
- Fig. 1: in perspektivischer Ansicht eine Moduleinheit mit Steckanschlüssen,
- Fig. 2: in Draufsicht eine Leiterplatte für eine in Zeilen- und Spaltenrichtung steckbare Moduleinheit, und
- Fig. 3: einen Anschlußstecker für den Anschluß des Anschlußkabels an die Türanlage.

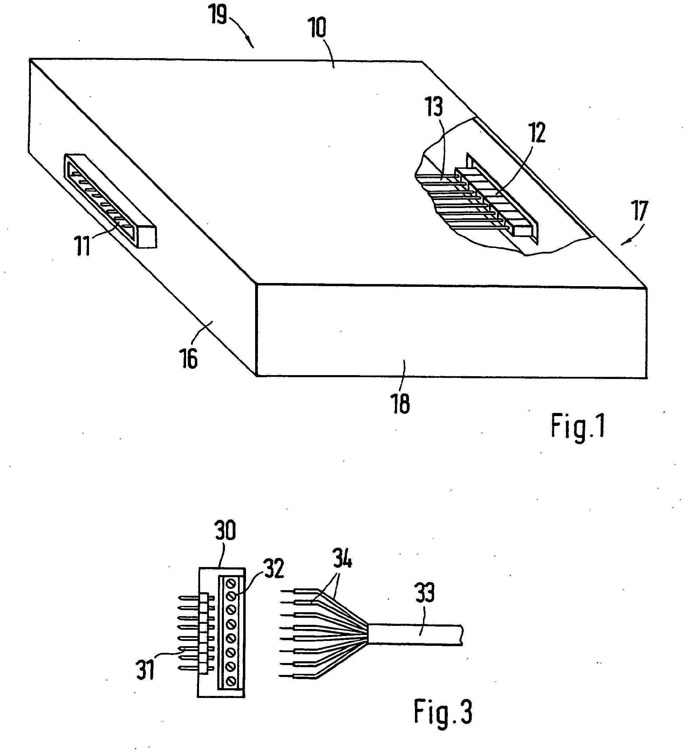

In Fig. 1 ist eine Moduleinheit 10 in quadratischer Form dargestellt, wobei die mechanischen Elemente für den Einbau der Moduleinheit 10 in ein nicht dargestelltes Aufnahmegehäuse weggelassen sind, da sie für die vorliegende Erfindung nicht von Bedeutung sind und in bekannter Weise ausgebildet sein können.

Für die Erfindung wesentlich ist, daß die Moduleinheit 10 mit Steckanschlüssen 11 und 12 an mindestens zwei einander gegenüberliegenden Außenseiten, z.B. 16 und 17, versehen ist. Die Steckanschlüsse 11 sind im gezeigten Ausführungsbeispiel als Steckerleiste und die Steckanschlüsse 12 als Steckbuchse ausgebildet, so daß Moduleinheiten 10 zeilenweise unmittelbar zusammengesteckt werden können. Die Steckerleiste und die Steckbuchse sind über eine Vielfachleitung 13 elektrisch parallelgeschaltet. Die Steckanschlüsse 11 und 12 können dabei bündig in die Außenseiten 16 und 17 der Moduleinheit 10 eingebaut werden. Die Moduleinheit 10 bildet daher mit der Verdrahtung eine Einheit.

Werden auch die einander gegenüberliegenden Außenseiten 18 und 19 der Moduleinheit 10 mit Steckanschlüssen 11 und 12 versehen, dann lassen sich die Moduleinheiten 10 sowohl zeilen-, als auch spaltenweise ineinanderstecken und elektrisch vielfachschalten. Dabei werden die Moduleinheiten 10 zuerst zeilenweise oder spaltenweise zusammengesteckt und danach die "Modulzeilen" oder "Modulspalten" ineinander gesteckt.

Die Steckanschlüsse 11 und 12 der Moduleinheiten 10 können auch einheitlich als Steckbuchsen ausgebildet und bündig in die Außenseiten 16 bis 19 der Moduleinheit 10 eingebaut sein. Für die Steckverbindung benachbarter Moduleinheiten 10 werden sowohl in Zeilen-, als auch in Spaltenrichtung Zusatzsteckerleisten verwendet, die beidseitig mit Steckbuchsen verbindbar sind. Das Aufnahmegehäuse kann dann das Rasterfeld der Moduleinheiten 10 eng umschließen.

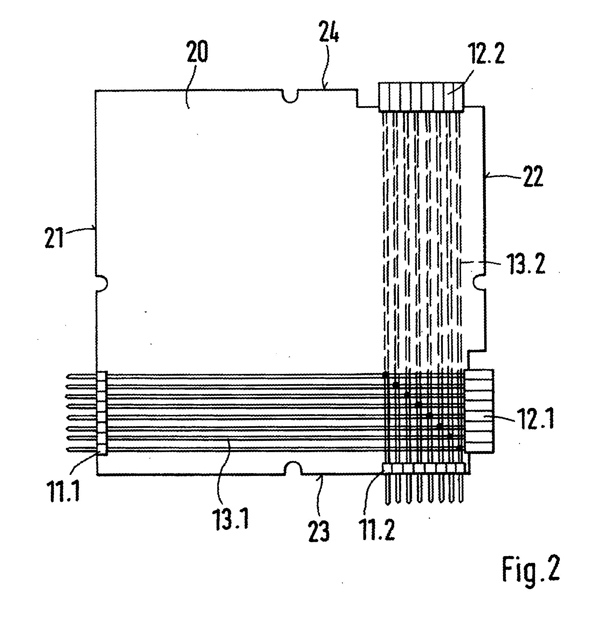

Fig. 2 zeigt eine in das Gehäuse der Moduleinheit 10 einsetzbare Leiterplatte 20, die in den Randbereichen von zwei senkrecht aufeinanderstoßenden Außenseiten, z.B. 23 und 22, jeweils eine Vielfachleitung 13.1 bzw. 13.2 trägt. Jede Vielfachleitung 13.1 und 13.2 ist mit einer Steckerleiste als Steckanschluß 11.1 bzw. 11.2 und einer Steckbuchse als Steckanschluß 12.1 bzw. 12.2 abgeschlossen, die über die Außenseiten 21 und 23 bzw. 22 und 24 zugänglich sind. Ist eine derartige Leiterplatte 20 in jede Moduleinheit 10 eingebaut, dann können die Moduleinheiten 10 in Zeilen und Spalten zu einem beliebig großen "Rasterfeld" zusammengesteckt werden, wobei die Steckverbindungen den mechanischen Halt der Moduleinheiten 10 in einem Aufnahmegehäuse noch unterstützen können. Selbstverständlich können die Steckanschlüsse 11.1, 11.2 und 12.1, 12.2 auch einheitlich als Steckbuchsen oder Steckerleisten ausgebildet sein und für die Verbindung benachbarter Moduleinheiten 10 Zusatzsteckerleisten für beidseitige Verbindung mit Steckbuchsen oder Zusatzsteckbuchsen für beidseitige Verbindung mit Steckerleisten verwendet werden.

Die Vielfachleitungen 13.1 und 13.2 werden vorzugsweise als gedruckte Leiterbahnen auf der Ober- und Unterseite der Leiterplatte 20 aufgebracht. Die Vielfachleitungen 13.1 und 13.2 werden an den Kreuzungspunkten ihrer Adern durchkontaktiert und so parallelgeschaltet.

Ist das "Rasterfeld" in dem Aufnahmegehäuse untergebracht, dann wird es mittels eines Anschlußsteckers 30 mit einem Anschlußkabel 33 angeschlossen. Der Anschlußstecker 30 ist auf der einen Seite als Steckerleiste 31 ausgebildet, die mit einem am Umfang des "Rasterfeldes" von Moduleinheiten 10 freien, als Steckerbuchse ausgebildeten Steckanschluß 12.1 oder 12.2 verbunden werden kann. Auf der anderen Seite ist der Anschlußstecker 30 mit Schraubanschlüssen 32 für die Adern 34 des Anschlußkabels 33 versehen. Der Anschlußstecker 30 kann anstelle der Steckerleiste 31 auch mit einer Steckbuchse versehen sein, die mit einem als Steckerleiste ausgebildete, freien Steckanschluß 11.1 oder 11.2 verbindbar ist.

Bei der Rasterfeldanordnung der Moduleinheiten brauchen nicht alle Moduleinheiten zeilen- und spaltenweise vielfachgeschaltet werden. Dies würde den Austausch einzelner Moduleinheiten aus dem Rasterfeld erschweren. Vielmehr genügt eine Ausgestaltung, die dadurch gekennzeichnet ist, daß bei in Zeilen und Spalten aneinandergereihten Moduleinheiten 10 nur in einer Zeile oder Spalte die Moduleinheiten 10 über Steckverbindungen miteinander verbunden sind, daß ausgehend von dieser Zeile oder Spalte die spalten- oder zeilenweise anschließenden Moduleinheiten 10 mittels Steckverbindungen mit den vielfachgeschalteten Moduleinheiten 10 dieser Zeile oder Spalte verbunden sind und daß die Moduleinheiten 10 allseitig bündig eingelassene Steckbuchsen tragen, die mit Zusatzsteckern miteinander verbindbar sind. Die Moduleinheiten lassen sich ohne Behinderung von benachbarten Spalten oder Zeilen spalten- oder zeilenweise von den in der Zeile oder Spalte vielfachgeschalteten Modulzeile oder Modulspalte lösen, da sie in den übrigen Zeilen oder Spalten nicht durch Steckverbindungen miteinander verbunden sind.

## Patentansprüche

1. Türsprechanlage mit einer Türstation, die in Zeilen und Spalten aneinanderreihbare Moduleinheiten (10) und ein Aufnahmegehäuse für dieModuleinheiten (10) aufweist, wobei die Moduleinheiten (10) mittels Verbindungsleitungen (13; 13.1; 13.2) elektrisch miteinander verbunden sind, wobei die Moduleinheiten (10) an den senkrecht zu den Zeilen und Spalten stehenden und jeweils einander gegenüberliegenden Außenseiten (16 und 17 bzw. 18 und 19) mit Steckanschlüssen (11 und 12 bzw. 11.1 und 12.1 bzw. 11.2 und 12.2) versehen sind,
die in der Moduleinheit mittels Vielfachleitungen (13; 13.1; 13.2) parallel geschaltet sind, wobei
in Zeilen- und/oder Spaltenrichtung aufeinander ausgerichtete Steckanschlüsse benachbarter Moduleinheiten (10) jeweils als Steckerleiste und Steckbuchse ausgebildet sind und direkt ineinander steckbar sind oder einheitlich als Steckbuchsen oder Steckerleisten ausgebildet über Zusatzsteckerleisten oder Zusatzsteckerbuchsen miteinander verbindbar sind, **dadurch gekennzeichnet**
**dass** die Moduleinheiten (10) an den jeweils einander gegenüberliegenden Außenseitenpaaren (16 und 17 bzw. 18 und 19) jeweils eine Steckerleiste und eine Steckbuchse tragen,
**dass** alle als Steckbuchsen und/oder als Steckerleisten ausgebildeten Steckanschlüsse (11 und 12; 11.1, 12.1, 11.2 und 12.2) der Moduleinheit (10) auf einer Leiterplatte (20) befestigt und mittels der Vielfachleitungen (13.1 und 13.2) miteinander verbunden sind, und
**dass** die beiden Vielfachleitungen (13.1 und 13.2) als gedruckte Leiterbahnen auf der Leiterplatte (20) aufgebracht und adernindividuell parallel geschaltet sind.

2. Türsprechanlage nach Anspruch 1,
**dadurch gekennzeichnet,**
**dass** die Moduleinheiten (10) quadratische Formen aufweisen.

3. Türsprechanlage nach Anspruch 1 oder 2,
**dadurch gekennzeichnet,**
**dass** die Vielfachleitungen (13.1 und 13.2) in die Randbereich von zwei senkrecht aufeinanderstoßende Außenseiten (22 und 23) der Leiterplatte (20) gelegt und im Bereich der Kreuzungspunkte ihrer Adern elektrisch miteinander verbunden sind.

4. Türsprechanlage nach einem der Ansprüche 1 bis 3,
**dadurch gekennzeichnet,**
**dass** die Leiterplatte (20) im Gehäuse der Moduleinheit (10) untergebracht ist, und
**dass** die für die Funktion der Moduleinheiten (10) erforderlichen Bauteile auf der Leiterplatte (20) befestigt und mit den Vielfachleitungen (13, 13.1, 13.2) verdrahtet sind.

5. Türsprechanlage nach einem der Ansprüche 3 bis 4,
**dadurch gekennzeichnet,**
**dass** die eine Vielfachleitung (zum Beispiel 13.1) auf der Oberseite und die andere Vielfachleitung (zum Beispiel 13.2) auf der Unterseite der Leiterplatte (20) aufgebracht sind.

6. Türsprechanlage nach einem der Ansprüche 1 bis 5,
**dadurch gekennzeichnet,**
**dass** die im Aufnahmegehäuse untergebrachten Moduleinheiten (10) mittels eines Anschlusssteckers (30) elektrisch anschließbar sind, der einseitig als Steckerleiste (31) oder Steckbuchse ausgebildet und mit einer umfangsseitig freien Steckbuchse oder Steckerleiste einer Moduleinheit der in Zeilen und/oder Spalten untereinander verbundenen Moduleinheiten (10) ansteckbar ist, und
**dass** der Anschlussstecker (30) auf der anderen Seite mit Schraubanschlüssen (32) für die Adern (34) eines Anschlusskabels (33) versehen ist.

7. Türsprechanlage nach einem der Ansprüche 1 bis 6,
**dadurch gekennzeichnet,**
**dass** die Steckerleisten und/oder Steckbuchsen bündig mit den Außenseiten (16, 17, 18,19) in die Moduleinheiten (10) eingebaut sind.

8. Türsprechanlage nach einem der Ansprüche 1 bis 7,
dass bei in Zeilen und Spalten aneinandergereihten Moduleinheiten (10) nur in einer Zeile oder Spalte die Moduleinheiten (10) über Steckverbindungen miteinander verbunden sind,
dass ausgehend von dieser Zeile oder Spalte die spalten- oder zeilenweise anschließenden Moduleinheiten (10) mittels Steckverbindungen mit den vielfachgeschalteten Moduleinheiten (10) dieser Zeile oder Spalte verbunden sind, und
dass die Moduleinheiten (10) allseitig bündig eingelassene Steckbuchsen tragen, die mit Zusatzsteckern miteinander verbindbar sind.

## Claims

1. Door intercom system having a door station which has module units (10) which can be lined up in rows and columns and an accommodation housing for the module units (10), with the module units (10) being electrically connected to one another by means of connecting lines (13; 13.1; 13.2), with the module units (10) being provided, on the outer faces (16 and 17 and, respectively, 18 and 19), which are perpendicular to the rows and columns and are each opposite one another, with plug connections (11 and 12 and, respectively, 11.1 and 12.1 and, respectively 11.2 and 12.2) which are connected in parallel in the module unit by means of multiple lines (13; 13.1; 13.2), with plug connections, which are aligned in relation to one another in the direction of rows and/or columns, of adjacent module units (10) respectively being in the form of a terminal strip and a plug socket and it being possible to directly insert them one into the other or to connect them to each another in a standard manner as plug sockets or terminal strips by means of auxiliary terminal strips or auxiliary plug sockets, **characterized in that** the module units (10) respectively have a terminal strip and a plug socket on the pairs (16 and 17 and, respectively 18 and 19) of outer faces which are each situated opposite one another, **in that** all plug connections (11 and 12; 11.1, 12.1, 11.2 and 12.2), which are in the form of plug sockets and/or terminal strips, of the module unit (10) are fixed to a printed circuit board (20) and are connected to one another by means of the multiple lines (13.1 and 13.2), and **in that** the two multiple lines (13.1 and 13.2) are provided on the printed circuit board (20) as printed conductor tracks and are connected in parallel for each individual core.

2. Door intercom system according to Claim 1, **characterized in that** the module units (10) have square shapes.

3. Door intercom system according to Claim 1 or 2, **characterized in that** the multiple lines (13.1 and 13.2) are laid in the edge region of two outer faces (22 and 23), which meet in a perpendicular manner, of the printed circuit board (20) and are electrically connected to one another in the region of the intersections of their cores.

4. Door intercom system according to one of Claims 1 to 3, **characterized in that** the printed circuit board (20) is accommodated in the housing of the module unit (10), and **in that** the components which are required for functioning of the module units (10) are fixed to the printed circuit board (20) and wired to the multiple lines (13, 13.1, 13.2).

5. Door intercom system according to either of Claims 3 and 4, **characterized in that** one multiple line (for example 13.1) is accommodated on the upper face and the other multiple line (for example 13.2) is accommodated on the lower face of the printed circuit board (20).

6. Door intercom system according to one of Claims 1 to 5, **characterized in that** the module units (10) which are accommodated in the accommodation housing can be electrically connected by means of a connection plug (30) which is in the form of a terminal strip (31) or plug socket at one end and can be plugged to a plug socket or terminal strip, which is free at the circumference, of a module unit of the module units (10) which are connected to one another in rows and/or columns, and **in that** the connection plug (30) is provided, at the other end, with screw connections (32) for the cores (34) of a connection cable (33).

7. Door intercom system according to one of Claims 1 to 6, **characterized in that** the terminal strips and/or plug sockets are incorporated in the module units (10) such that they are flush with the outer faces (16, 17, 18, 19).

8. Door intercom system according to one of Claims 1 to 7, **characterized in that**, in the case of module units (10) which are lined up in rows and columns, the module units (10) are connected to one another only in one row or column via plug connections, **in that**, starting from this row or column, the module units (10) which are connected by column or row are connected to the multiply connected module units (10) of this row or column by means of plug connections, and **in that** the module units (10) have, on all sides, plug sockets which are embedded flush and can be connected to one another with auxiliary plugs.

## Revendications

1. Interphone comprenant une station de porte qui présente des unités modulaires (10) pouvant être agencées successivement en lignes et colonnes et un boîtier de réception pour les unités modulaires (10), les unités modulaires (10) étant connectées électriquement les unes aux autres au moyen de lignes de connexion (13 ; 13.1 ; 13.2), les unités modulaires (10) étant pourvues de connexions à fiches (11 et 12, respectivement 11.1 et 12.1, respectivement 11.2 et 12.2) au niveau des côtés extérieurs opposés (16 et 17 respectivement 18 et 19) perpendiculaires aux lignes et aux colonnes, les connexions à fiches étant montées dans l'unité modulaire en parallèle au moyen de lignes multiples (13 ; 13.1 ; 13.2), des connexions à fiches, orientées les unes vers les autres dans la direction des lignes et/ou des colonnes, d'unités modulaires adjacentes (10) étant réalisées à chaque fois sous forme de barrettes de connexion et de douilles de connexion et pouvant être enfichées directement les unes dans les autres ou bien étant réalisées sous forme unitaire en tant que douilles de connexion ou barrettes de connexion et pouvant être connectées les unes aux autres par le biais de barrettes de connexion supplémentaires ou de douilles de connexion supplémentaires,
**caractérisé en ce que**
les unités modulaires (10) portent une barrette de connexion et une douille de connexion respectives sur les paires de côtés extérieurs opposés (16 et 17, respectivement 18 et 19),
**en ce que** toutes les connexions à fiches (11 et 12 ; 11.1, 12.1, 11.2 et 12.2) réalisées sous forme de douilles de connexion et/ou de barrettes de connexion de l'unité modulaire (10) sont fixées sur une carte à circuits imprimés (20) et sont connectées les unes aux autres au moyen des lignes multiples (13.1 et 13.2) et **en ce que** les deux lignes multiples (13.1 et 13.2) sont montées sous forme de pistes conductrices imprimées sur la carte à circuits imprimés (20) et sont branchées en parallèle par fils individuels.

2. Interphone selon la revendication 1,
**caractérisé en ce que**
les unités modulaires (10) présentent des formes parallélépipédiques.

3. Interphone selon la revendication 1 ou 2,
**caractérisé en ce que**
les lignes multiples (13.1 et 13.2) sont posées dans la région de bord de deux côtés extérieurs (22 et 23) butant verticalement l'un contre l'autre de la carte à circuits imprimés (20) et sont connectées l'une à l'autre électriquement dans la région des intersections de leurs fils.

4. Interphone selon l'une quelconque des revendications 1 à 3,
**caractérisé en ce que**
la carte à circuits imprimés (20) est montée dans le boîtier de l'unité modulaire (10), et
**en ce que** les composants nécessaires pour le fonctionnement des unités modulaires (10) sont fixés sur la carte à circuits imprimés (20) et sont câblés avec les lignes multiples (13 ; 13.1 ; 13.2).

5. Interphone selon l'une quelconque des revendications 3 à 4,
**caractérisé en ce que**
l'une des lignes multiples (par exemple 13.1) est montée sur le côté supérieur et l'autre ligne multiple (par exemple 13.2) est montée sur le côté inférieur de la carte à circuits imprimés (20).

6. Interphone selon l'une quelconque des revendications 1 à 5,
**caractérisé en ce que**
les unités modulaires (10) montées dans le boîtier de réception peuvent être raccordées électriquement au moyen d'une fiche de connexion (30) qui est réalisée d'un côté sous forme de barrette de connexion (31) ou de douille de connexion, et qui peut être enfichée avec une douille de connexion ou une barrette de connexion libre du côté périphérique d'une unité modulaire des unités modulaires (10) connectées les unes aux autres en lignes et/ou colonnes, et
**en ce que** la fiche de connexion (30) est pourvue de l'autre côté de raccords vissés (32) pour les fils (34) d'un câble de raccordement (33).

7. Interphone selon l'une quelconque des revendications 1 à 8,
**caractérisé en ce que**
les barrettes de connexion et/ou les douilles de connexion sont incorporées en affleurement avec les côtés extérieurs (16, 17, 18, 19) dans les unités modulaires (10).

8. Interphone selon l'une quelconque des revendications 1 à 7,
**caractérisé en ce que**
parmi les unités modulaires (10) agencées successivement en lignes et colonnes, les unités modulaires (10) sont connectées les unes aux autres par le biais de connexions à fiches uniquement dans une ligne ou une colonne,
**en ce qu'**à partir de cette ligne ou de cette colonne, les unités modulaires (10) se raccordant en colonnes ou en lignes sont connectées au moyen de connexions à fiches aux unités modulaires (10) montées sous forme multiple de cette ligne ou colonne, et
**en ce que** les unités modulaires (10) portent de tous les côtés des douilles de connexion encastrées en affleurement qui peuvent être connectées les unes aux autres avec des connecteurs supplémentaires.
